# EUROPÄISCHE PATENTSCHRIFT

(11) **EP 2 679 846 B1**
(45) Veröffentlichungstag und Bekanntmachung des Hinweises auf die Patenterteilung: **26.05.2021**
(21) Anmeldenummer: 13173708.2
(22) Anmeldetag: 26.06.2013
(51) Int. Cl.: F16C 41/00, B21B 31/07, F16C 13/02, F16C 19/52

(54) **Walzenlagereinheit und Messeinheit**
Roller bearing unit and measuring unit
Unité de palier à rouleaux et unité de mesure

(30) Priorität: 26.06.2012 DE 102012210878
(43) Veröffentlichungstag der Anmeldung: 01.01.2014
(73) Patentinhaber: Aktiebolaget SKF, 415 50 Göteborg (SE)
(72) Erfinder: Blum, Jürgen, 97618 Unsleben (DE); Kern-Trautmann, Andreas, 97230 Estenfeld (DE); Säger, Uwe, 97531 Theres (DE); Werner, Ralph, 97456 Dittelbrunn (DE)
(74) Vertreter: Schonecke, Mitja

(56) Entgegenhaltungen:
- DE-U1- 20 203 544
- JP-A- S55 156 608
- US-A1- 2003 218 548

## Beschreibung

Die Erfindung geht aus von einer Masseinheit für eine Walzenlagereinheit nach dem Oberbegriff des Anspruchs 1.

Es ist eine Walzenlagereinheit bekannt, welche ein Lager aufweist, das eine Walze an einem Ende der Walze lagert. Ferner weist die Walzenlagereinheit eine Trägereinheit auf, die in einem Betriebszustand die Gewichtskraft des Lagers aufnimmt und an den Erdboden weitergibt. Eine Einheit, welche dazu vorgesehen ist, eine auf sie übertragene Kraft zu messen, ist in die Trägereinheit integriert.

US 2003/218548 A1 lehrt ein vierreihiges Kegelrollenlager, das in den Freiraum zwischen der Innenfläche eines Gehäuses und der Außenfläche einer Rollwalze eingebaut ist In der aus diesem Dokument bekannten Anordnung ist eine gattungsgemäße Messeinheit mit einem ringförmigen Trägerelement aus Metall vorgesehen, wobei Dehnungsmessstreifen in einer Nut des Trägerelements angeordnet sind.

DE 202 03 544 U1 lehrt eine Lageranordnung für ein Einbaustück einer Walzenzapfenlagerung einer Stütz-, Zwischen- oder Arbeitswalze in einem Duo-, Quarto- oder Sextogerüst einer ein- oder mehrgerüstigen Walzstraße, wobei die Lageranordnung sowohl radiale als auch axiale Kräfte überträgt In einer Nut eines Außenrings ist ein ringförmiges Messelement mit einer im Schnitt U-förmigen Gestalt vorgesehen, wobei Dehnungsmessstreifen in dem U-förmigen Messelement angeordnet sind.

JP 855 156608 A lehrt eine Vorrichtung zur genauen Messung der Schublast, indem die Schublast auf ein Messlager geladen wird, das so aufgebaut ist, dass es nur die Schublast aufnehmen kann. Ein elektrisches Signal wird erzeugt unter Verwendung des Lasterfassungselements.

Die Aufgabe der Erfindung besteht insbesondere darin, eine gattungsgemäße Messeinheit für eine Walzenlagereinheit mit einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird vorgeschlagen, dass die erste Messeinheit eingerichtet ist um zerstörungsfrei von der Trägereinheit und dem Lager demontierbar und im demontierten Zustand kalibrierbar zu sein. Unter "vorgesehen" soll insbesondere speziell ausgelegt und/oder speziell ausgestattet und/oder speziell programmiert verstanden werden. Unter einem "Großteil" einer Gewichtskraft sollen insbesondere wenigstens 50 %, vorzugsweise wenigstens 75 % und besonders bevorzugt wenigstens 95 % der Gewichtskraft verstanden werden. Mit einer erfindungsgemäßen Ausgestaltung kann eine hohe Effizienz erreicht werden. Insbesondere kann eine einfache und kostengünstige Bauweise erreicht werden. Insbesondere kann eine Kalibrierung der ersten Messeinheit in einem Zustand, in welchem die erste Messeinheit von der Trägereinheit und dem Lager demontiert ist, durchgeführt werden, wodurch ein geringer Aufwand zur Kalibrierung erreicht wird. Ferner kann insbesondere erreicht werden, dass bei einer Auswechslung des Lagers die erste Messeinheit nicht ebenfalls ausgewechselt werden muss, so dass ein kostengünstiger langfristiger Betrieb der Walzenlagereinheit erzielt wird.

Erfindungsgemäß weist die Messeinheit ein ringförmiges, aus Metall bestehendes Trägerelement auf, welches eine Nut aufweist. Die Sensorelemente sind in der Nut angeordnet. Ferner ist die Nut mit einem aus Kunststoff bestehenden Füllelement aufgefüllt, welches stoffschlüssig mit dem Trägerelement verbunden ist. Somit ist die erste Messeinheit nur unter Zerstörung in Einzelteile zerlegbar. Hierdurch kann eine konstruktiv einfache und stabile Bauweise erreicht werden.

Ferner wird eine Walzenlagereinheit mit zumindest einer Messeinheit und ein Walzwerk mit einer Walzenlagereinheit vorgeschlagen.

Durch die ringförmige Ausbildung der Messeinheit kann ein genaues Messen erreicht werden. Insbesondere kann das Messen von Axialkräften am mehreren Umfangsbereichen erfolgen.

Weitere Vorteile ergeben sich aus der folgenden Zeichnungsbeschreibung. In den Zeichnungen ist ein Ausführungsbeispiel der Erfindung dargestellt.
Fig. 1 zeigt einen schematischen Teilschnitt durch einen Teil eines Walzwerks mit einem Teil einer erfindungsgemäßen Walzenlagereinheit,
Fig. 2 zeigt eine schematische perspektivische Ansicht eines Schnitts durch eine erfindungsgemäße Messeinheit der Walzenlagereinheit, und
Fig. 3 zeigt eine perspektivische Ansicht der Messeinheit.

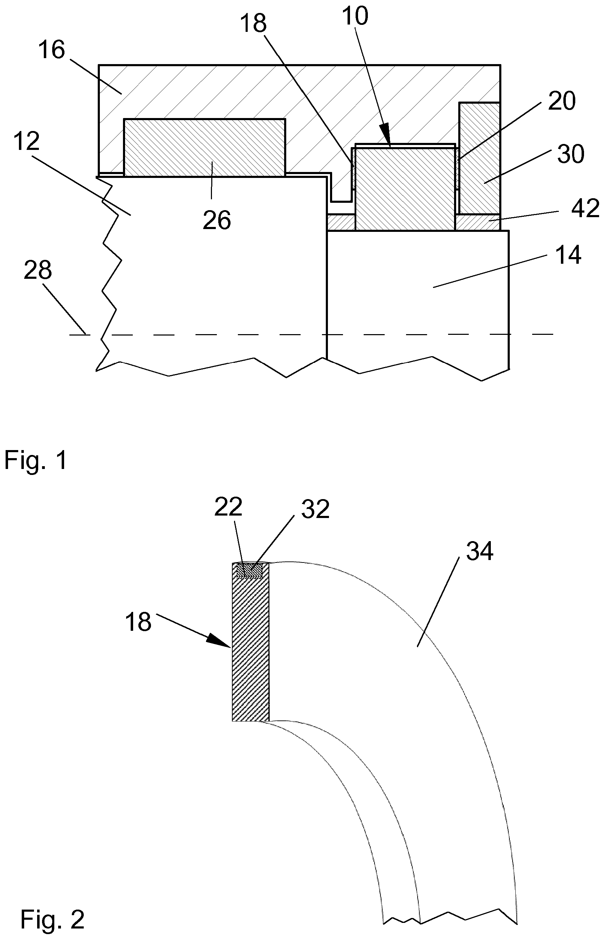

Figur 1 zeigt einen schematischen Teilschnitt durch einen Teil eines Walzwerks mit einem Teil einer erfindungsgemäßen Walzenlagereinheit. Das Walzwerk ist zu einem Walzen von Blech aus Stahl oder Aluminium vorgesehen. Ein Zylinderrollenlager 26 der Walzenlagereinheit nimmt radiale Kräfte einer Walze 12 des Walzwerks auf. Ferner nimmt bei einem Betriebsvorgang ein Lager 10 der Walzenlagereinheit, welches als doppelreihiges Kegelrollenlager ausgebildet ist, Kräfte der Walze 12, welche diese parallel zu einer Achse 28 abgibt, auf. Bei dem Betriebsvorgang dreht sich die Walze 12 um die Achse 28. Ein Innenring (nicht als Einzelteil dargestellt) des Lagers 10 ist an einem Ende 14 der Walze 12 befestigt. Der Innenring überträgt bei dem Betriebsvorgang die Kräfte der Walze 12, welche diese parallel zu der Achse 28 abgibt, auf Wälzkörper des Lagers 10, wobei die Wälzkörper die Kräfte auf den Außenring des Lagers 10 übertragen und der Außenring die Kräfte auf eine erste Messeinheit 18 der Walzenlagereinheit oder auf eine zweite Messeinheit 20 der Walzenlagereinheit überträgt. Ferner weist die Walzenlagereinheit eine Trägereinheit 16 auf, welche die Kräfte und die Gewichtskraft des Lagers 10 und die Gewichtskraft der Walze 12 aufnimmt und an den Erdboden weitergibt. Diejenigen von den Wälzkörpern auf den Außenring übertragenen Kräfte, die parallel zu der Achse 28 in Richtung der Messeinheit 18 wirken, werden auf die Messeinheit 18 übertragen. Diejenigen von den Wälzkörpern auf den Außenring übertragenen Kräfte, die parallel zu der Achse 28 in Richtung der Messeinheit 20 wirken, werden auf die Messeinheit 20 übertragen. Die Messeinheiten 18,20 sind dazu vorgesehen, die auf sie durch den Außenring übertragenen Kräfte zu messen. Ferner sind die Messeinheiten baugleich.

Die Messeinheiten 18,20 sind jeweils getrennt von dem Lager 10 ausgebildet. Die Messeinheiten 18, 20 sind zerstörungsfrei von der Trägereinheit 16 und dem Lager 10 demontierbar. Ein Deckel 30 der Walzenlagereinheit klemmt das Lager 10 und die Messeinheiten 18,20 an der Trägereinheit 16 fest. Der Deckel 30 ist zerstörungsfrei von der Trägereinheit 16 demontierbar. Die Messeinheiten 18, 20 und das Lager 10 weisen jeweils eine ringförmige Form auf. Nach der Demontage des Deckels von der Trägereinheit 16 und der zerstörungsfreien Demontage eines weiteren Bauteils 42 der Walzenlagereinheit von dem Ende 14 sind die Messeinheiten 18,20 und das Lager 10 einzeln von der Trägereinheit 16 und dem Ende 14 abnehmbar, wobei elektrische Verbindungen zwischen der Trägereinheit 16 und den Messeinheiten 18,20 bestehen bleiben, so dass die Messeinheiten 18,20 zerstörungsfrei von dem Lager 10 und der Trägereinheit 16 demontierbar sind. Die elektrischen Verbindungen können ebenfalls zerstörungsfrei trennbar sein. Der Außenring ist in Bezug auf die axiale Richtung des Lagers 10 zwischen der Messeinheit 18 und der Messeinheit 20 angeordnet.

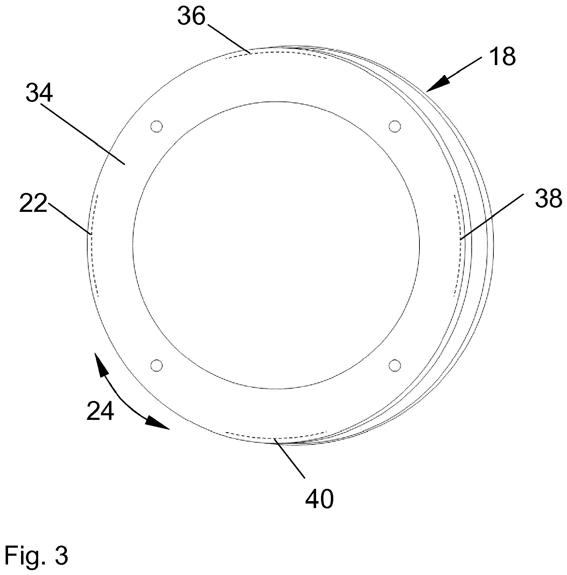

Die erste Messeinheit 18 weist vier Sensorelemente 22, 36,38, 40 auf, welche gleichmäßig entlang einer Umfangsrichtung 24 der Messeinheit 18 verteilt angeordnet sind (Figuren 2 und 3). Die Sensorelemente 22, 36,38, 40 sind baugleich und jeweils durch einen Dehnmessstreifen gebildet. Übt das Lager 10 entlang der Achse 28 eine Kraft auf die Messeinheit 18 aus, so wird die Messeinheit 18 parallel zu der Achse 28 elastisch komprimiert, wodurch auch die Sensorelemente 22, 36,38, 40 komprimiert werden. Die Sensorelemente 22, 36,38, 40 messen die Strecke, um welche sie dabei parallel zu der Achse 28 komprimiert werden. Eine elektronische Einheit der Walzenlagereinheit (nicht dargestellt) erhält die von den Sensorelementen 22, 36,38, 40 gemessenen Daten und berechnet daraus eine auf die Walze 12 parallel zu der Achse 28 wirkende Kraft. Übersteigt diese Kraft einen in der elektronischen Einheit gespeicherten Wert, so wird dies einem Bediener des Walzwerks angezeigt. Alternativ oder zusätzlich kann die elektronische Einheit mit Hilfe von Aktuatoren des Walzwerks eine Änderung der Position der Walze 12 relativ zu einer weiteren Walze des Walzwerks (nicht dargestellt), welche zusammen mit der Walze 12 zum Walzen von Blech vorgesehen ist, veranlassen, wenn diese Kraft den in der elektronischen Einheit gespeicherten Wert übersteigt. Diese Änderung der Position kann eine parallele Ausrichtung der Walze 12 zu der weiteren Walze sein. Die parallele Ausrichtung hebt eine Schrägstellung der beiden Walzen relativ zueinander auf, welche zu erhöhten, auf die Walzen wirkenden Axialkräften führt. Alternativ kann die elektronische Einheit das Walzwerk abschalten. Prinzipiell ist denkbar, dass die elektronische Einheit mit Hilfe der Daten der Sensorelemente eine Regelung, wie insbesondere eine Regelung eines Abstands der Walzen, durchführt. Durch die Messeinheiten und die elektronische Einheit können Lagerschäden und insbesondere auch ein Walzenabriss vermieden werden. Die elektronische Einheit und die Messeinheiten sind während eines Betriebs des Walzwerks permanent aktiv. Die Messeinheiten können im demontierten Zustand kalibriert werden.

Die Messeinheit 18 ist nur unter Zerstörung in Einzelteile zerlegbar. Die Messeinheit 18 weist erfindungsgemäß ein ringförmiges, aus Metall bestehendes Trägerelement 34 auf, welches eine Nut aufweist. Die Sensorelemente sind in der Nut angeordnet. Ferner ist die Nut mit einem aus Kunststoff bestehenden Füllelement aufgefüllt, welches stoffschlüssig mit dem Trägerelement 34 verbunden ist.

**Bezugszeichenliste**

| | |
|---|---|
| 10 | Lager |
| 12 | Walze |
| 14 | Ende |
| 16 | Trägereinheit |
| 18 | Messeinheit |
| 20 | Messeinheit |
| 22 | Sensorelement |
| 24 | Umfangsrichtung |
| 26 | Zylinderrollenlager |
| 28 | Achse |
| 30 | Deckel |
| 32 | Füllelement |
| 34 | Trägerelement |
| 36 | Sensorelement |
| 38 | Sensorelement |
| 40 | Sensorelement |
| 42 | Bauteil |

## Patentansprüche

1. Messeinheit (18, 20) für eine Walzenlagereinheit, welche dazu vorgesehen ist eine auf sie übertragene Kraft zu messen, wobei die Messeinheit (18, 20) eingerichtet ist, um zerstörungsfrei von einer Trägereinheit (16) und einem Lager (10) der Walzenlagereinheit demontierbar zu sein,
wobei die Messeinheit (18, 20) weiter eingerichtet ist, um im demontierten Zustand kalibrierbar zu sein, wobei die Messeinheit (18, 20) ein ringförmiges, aus Metall bestehendes Trägerelement (34) aufweist, welches eine Nut aufweist, und wobei Sensorelemente (22) in der Nut angeordnet sind, **dadurch gekennzeichnet, dass** die Nut mit einem aus Kunststoff bestehenden Füllelement (32) aufgefüllt ist, welches stoffschlüssig mit dem Trägerelement (34) verbunden ist

2. Walzenlagereinheit mit wenigstens einem Lager (10), welches dazu vorgesehen ist, eine Walze (12) an wenigstens einem Ende (14) der Walze zu lagern, mit zumindest einer Trägereinheit (16), welche in wenigstens einem Betriebszustand wenigstens einen Großteil der Gewichtskraft des Lagers aufnimmt und an den Erdboden weitergibt, und mit zumindest einer ersten Messeinheit (18) nach Anspruch 1, welche dazu vorgesehen ist, eine auf sie übertragene Kraft zu messen.

3. Walzenlagereinheit nach Anspruch 2, wobei das Lager (10) und die Messeinheit (18) derart angeordnet sind, dass Kräfte, die auf das Lager in die axiale Richtung des Lagers auf die Messeinheit zu und/oder von der Messeinheit weg wirken, zumindest teilweise auf die Messeinheit übertragen werden.

4. Walzenlagereinheit nach einem der vorherigen Ansprüche, wobei die Walzenlagereinheit eine zweite Messeinheit (20) aufweist und das Lager (10) wenigstens teilweise zwischen der ersten und der zweiten Messeinheit (18, 20) angeordnet ist.

5. Walzenlagereinheit nach einem der vorherigen Ansprüche, wobei die erste Messeinheit (18) zumindest zwei Sensorelemente (22) aufweist, die entlang einer Umfangsrichtung (24) der ersten Messeinheit angeordnet sind.

6. Walzenlagereinheit nach einem der vorherigen Ansprüche, wobei die erste Messeinheit (18) wenigstens einen Dehnmessstreifen aufweist.

7. Walzwerk mit einer Walzenlagereinheit nach einem der Ansprüche 2 bis Z 6.

## Claims

1. Measuring unit (18, 20) which is intended for a roller-bearing unit and is provided to measure a force transmitted to it, wherein the measuring unit (18, 20) is designed so that it can be dismounted in a nondestructive manner from a carrier unit (16) and a bearing (10) of the roller-bearing unit,
wherein the measuring unit (18, 20) is also designed so that, in the dismounted state, it can be calibrated,
wherein the measuring unit (18, 20) has an annular carrier element (34), which consists of metal and has a groove,
and wherein sensor elements (22) are arranged in the groove,
**characterized**
**in that** the groove is filled with a filling element (32) which consists of plastic material and is connected integrally to the carrier element (34).

2. Roller-bearing unit having at least one bearing (10), which is provided to bear a roller (12) at at least one end (14) of the roller, having at least one carrier unit (16), which, in at least one operating state, absorbs at least a large part of the weight-induced force of the bearing and transfers it to the ground, and having at least one first measuring unit (18) according to Claim 1, which is provided to measure a force transmitted to it.

3. Roller-bearing unit according to Claim 2,
wherein the bearing (10) and the measuring unit (18) are arranged such that forces which act on the bearing in the axial direction of the bearing, towards the measuring unit and/or away from the measuring unit, are transmitted at least to some extent to the measuring unit.

4. Roller-bearing unit according to one of the preceding claims, wherein the roller-bearing unit has a second measuring unit (20) and the bearing (10) is arranged at least to some extent between the first and the second measuring units (18, 20).

5. Roller-bearing unit according to one of the preceding claims, wherein the first measuring unit (18) has at least two sensor elements (22), which are arranged along a circumferential direction (24) of the first measuring unit.

6. Roller-bearing unit according to one of the preceding claims, wherein the first measuring unit (18) has at least one strain gauge.

7. Rolling mill having a roller-bearing unit according to one of Claims 2 to 6.

## Revendications

1. Unité de mesure (18, 20) pour une unité de palier à cylindre, qui est prévue pour mesurer une force qui lui est transmise, l'unité de mesure (18, 20) étant conçue pour pouvoir être démontée sans être détruite à partir d'une unité support (16) et d'un palier (10) de l'unité de palier à cylindre,
l'unité de mesure (18, 20) étant en outre conçue pour pouvoir être calibrée à l'état démonté,
l'unité de mesure (18, 20) comprenant un élément support annulaire (34), constitué de métal, qui comprend une rainure,
et des éléments capteurs (22) étant agencés dans la rainure,
**caractérisée en ce que**
la rainure est remplie avec un élément de remplissage (32) constitué de matière plastique, qui est relié par accouplement de matière avec l'élément support (34).

2. Unité de palier à cylindre munie d'au moins un palier (10), qui est prévue pour supporter un cylindre (12) au niveau d'au moins une extrémité (14) du cylindre, munie d'au moins une unité support (16), qui dans au moins un état de fonctionnement absorbe au moins une grande partie du poids du palier et le transfère au sol, et munie d'au moins une première unité de mesure (18) selon la revendication 1, qui est prévue pour mesurer une force qui lui est transmise.

3. Unité de palier à cylindre selon la revendication 2, dans laquelle le palier (10) et l'unité de mesure (18) sont agencés de telle sorte que des forces qui agissent sur le palier dans la direction axiale du palier vers l'unité de mesure et/ou en s'éloignant de l'unité de mesure soient au moins partiellement transmises à l'unité de mesure.

4. Unité de palier à cylindre selon l'une quelconque des revendications précédentes, dans laquelle l'unité de palier à cylindre comprend une deuxième unité de mesure (20), et le palier (10) est agencé au moins partiellement entre la première et la deuxième unité de mesure (18, 20).

5. Unité de palier à cylindre selon l'une quelconque des revendications précédentes, dans laquelle la première unité de mesure (18) comprend au moins deux éléments capteurs (22), qui sont agencés le long d'une direction périphérique (24) de la première unité de mesure.

6. Unité de palier à cylindre selon l'une quelconque des revendications précédentes, dans laquelle la première unité de mesure (18) comprend au moins une jauge de contrainte.

7. Laminoir muni d'une unité de palier à cylindre selon l'une quelconque des revendications 2 à 6.
